Europäisches Patentamt

European Patent Office

Office européen des brevets

(11) Publication number: **0 362 900**
**A2**

## (12) EUROPEAN PATENT APPLICATION

(21) Application number: 89120129.5

(51) Int. Cl.5: **H04J 14/00 , G02B 27/28**

(22) Date of filing: **13.09.85**

(30) Priority: **13.09.84 US 650012**

(43) Date of publication of application:
**11.04.90 Bulletin 90/15**

(60) Publication number of the earlier application in accordance with Art.76 EPC: **0 177 800**

(84) Designated Contracting States:
**BE DE IT**

(71) Applicant: **GTE LABORATORIES INCORPORATED**
**100 West 10th Street**
**Wilmington, DE 19800(US)**

(72) Inventor: **Carlsen, W. John**
**2 Hawthorne Place No.14J**
**Boston, MA 02114(US)**
Inventor: **Melman, Paul**
**111 Brandeis Road**
**Newton, MA 02159(US)**

(74) Representative: **Patentanwälte Grünecker, Kinkeldey, Stockmair & Partner**
**Maximilianstrasse 58**
**D-8000 München 22(DE)**

(54) **Four channel optical wavelength multiplexer.**

(57) A four channel optical multiplexer can be simplified when the polarisation state of the input signals is known. Such an improved four channel optical multiplexer (50) consists of three polarisation beamsplitters (52, 53, 54), a reflecting surface and a simple birefringent crystal (51) such as, for example, quartz. The spacing and location of the wavelength channels ($\lambda 1$, $\lambda 2$, $\lambda 3$, $\lambda 4$) is determined by the thickness of the single birefringent crystal (51).

EP 0 362 900 A2

FIG. 3

# FOUR CHANNEL OPTICAL WAVELENGTH MULTIPLEXER

This invention relates to a four channel optical wavelength multiplexer. Accordingly, it is a general object of this invention to provide new and improved devices of such character.

Optical wavelength division multiplexing is a technique for combining two or more light beams with different wavelengths along a single optical path. Optical wavelength division demultiplexing involves the separation of these signals from one another at the other end of that path. Optical multiplexers and demultiplexers are often interchangeable with each other.

Optical wavelength division multiplexing and demultiplexing can be used in optical communications systems to multiply the effective information capacity (or signal bandwidth) of a single optical communication pathway. The medium may be optical fiber, free space (or air), water, etc. Individual channels can be transmitted along the path on different optical wavelength carriers, each of which propagates independently of the others.

The multiplexers and demultiplexers described herein (sometimes generically referred to as "multiplexers") provide for an arbitrarily small separation between channel wavelengths so that a required number of channels can be located within an acceptable wavelength range therefor. This feature is especially desirable in dense media, such as glass fibers or water, since such media generally have a very limited wavelength range over which the chromatic optical dispersion is near zero and the total losses are small. For example, for glass, the wavelength range might be approximately 60 nanometers, depending upon the glass. (Contemporary single-mode fibers used at about $1.3\mu m$ have a wavelength range thereabout.) Outside of this narrow range, additional channels are of little value.

The channel spacing of the multiplexed signals can be as small as desired, as will be made more apparent hereinafter. The size of the spacing is limited primarily by the stability and spectral width of the optical sources that are utilized, such as lasers.

The locations of and spacings between the channel wavelengths can be determined by the thicknesses of prisms in the multiplexers, and these are the only fabrication parameters which generally need be changed to customize the units for a specific application. The devices can be continually tuned by varying the effective thicknesses of the prisms. In the case of a two-channel system, a multiplexer and a demultiplexer can be independently tuned to exactly match the wavelengths of two lasers in the system, so that the laser wavelengths do not have to be precisely specified. Although the invention is primarily applicable to a fiber optical system, it is to be understood that its precepts can be applied to free-space and other optical communications applications, as would be apparent to those skilled in the art.

Prior Techniques and Disadvantages Thereof

A. Dichroic beamsplitter method:

In the dichroic beamsplitter method, two light signals impinge upon a beam-splitter that is designed to transmit one wavelength and to reflect the other. At the multiplexer end, one wavelength passes through the beamsplitter, and the other wavelength is incident at such an angle that it is reflected by the beamsplitter along the same optical path as the first. Both beams are then coupled by the same optics into a system fiber.

At the demultiplexer end, where the two wavelengths are separated, one wavelength passes through a beamsplitter, while the other wavelength is reflected from the beamsplitter. The individual beams thus separated can then be individually processed. To multiplex or demultiplex more than two wavelength channels, more than one device can, in principle, be used in a tree or series configuration.

Disadvantageously, in practice, such devices have not been able to handle more than three wavelengths with reasonable performance. Because it is difficult to consistently control and reproduce the transmission/reflection characteristics over many channels, with low losses and crosstalk for all channels, it is unlikely that such multiplexers will be useful in future multi-channel applications.

B. Diffraction grating method:

A grating is utilized to diffract different wavelengths of light at different angles such that multiple wavelengths are separated from one another in different directions of propagation or combined to form a single beam when incident from multiple angles. Diffraction gratings have the potential advantage that a single device is able to handle more than two wavelengths, while all other previously known types can only handle two sets of wavelengths per stage.

Disadvantageously, diffraction gratings are inherently polarization sensitive. In single mode systems, the continual polarization variations in the fiber result in significant fading problems in the receiver.

Because the angles of diffraction are a sensitive function of wavelength, and are more sensitive for smaller interchannel separations than for larger ones, any change of laser wavelength causes the focused spot of light to wander from the optimal position at the end of the fiber. In demultiplexers, with reasonably wide channel spacings available, this can be somewhat accommodated by utilizing output fibers with much larger diameters than that of the system fiber, or by using detector cells themselves to collect the light.

In grating multiplexers, however, this has not been possible, since the output fiber is the small core system fiber, and in practice, a wandering misalignment has been intolerable for the system. For single-mode systems now becoming dominant in communications, or for closer channel spacings, this problem is even worse.

Because the different wavelengths propagate at several different closely spaced angles, the fabrication of such a device is extremely difficult. The fibers must be bunched very closely together, at specific directions with respect to one another. This usually requires individual adjustments with micromanipulators, or precision fiber-aligning grooves which cannot be adjusted.

C. Holographic devices:

Holographic devices are essentially diffraction gratings that are made by the optical technique of holography. Often, the hologram is designed to perform lens type operations as well as diffraction, so some external optics can be eliminated.

Disadvantageously, in addition to the problems with conventional gratings, holographic gratings usually have higher throughput losses, especially when combined with focusing functions.

Another object of this invention is to provide for a new and improved optical multiplexer and demultiplexer, utilizing neither dichroic filters nor diffraction to achieve wavelength selectivity.

Still another object of this invention is to provide for a new and improved optical multiplexer and demultiplexer utilizing the optical technique of birefringent interferometry.

Yet another object of this invention is to provide for a new and improved optical multiplexer and demultiplexer utilizing no highly wavelength sensitive optical coatings, and in which wide bandwidth antireflection coatings and polarization beamsplitter coatings can be used that do not need to be respecified for each system application.

Still yet another object of this invention is to provide for a new and improved optical multiplexer and demultiplexer in which the channel wavelengths and spacings are determined by the thickness of a single crystal in each unit and in which, otherwise, all units can be identical.

Yet still another object of this invention is to provide for a new and improved birefringent optical wavelength multiplexer/demultiplexer in which, unlike any other previous known multiplexing technique, an individual unit can be independently tuned so that the spacing and location of its wavelength passband can be selected and, in the case of two channels, any two lasers can be selected and the multiplexer/demultiplexer later can be precisely tuned to those wavelengths.

Still yet another object of this invention is to provide for a new and improved optical wavelength multiplexer/demultiplexer in which a standard configuration thereof is insensitive to polarization changes.

And yet still another object of this invention is to provide for a new and improved optical wavelength multiplexer/demultiplexer, which, when multiple units are utilized to multiplex (or demultiplex) more than two channels only one unit, the one closest to the system link, processes channels which are closest together.

Other objects, advantages and features of this invention, together with its construction and mode of operation, will become more apparent from the following description, when read in conjunction with the accompanying drawings, in which:

FIG. 1 is a block diagram of a birefringent multiplexer/demultiplexer, utilizing a tree structure of comb filter units, each comb filter block in the figure containing a graph of the transfer functions for two transmission paths therethrough, a four channel device being shown by way of illustration and the lines between units representing either interconnecting fibers or freely propagating collimated light beams;

FIG. 2 is a schematic optical diagram of a single comb filter unit in accordance with this invention;

FIG. 2A is a chart of wavelength versus output amplitude for various signals applied to the device of Fig. 2;

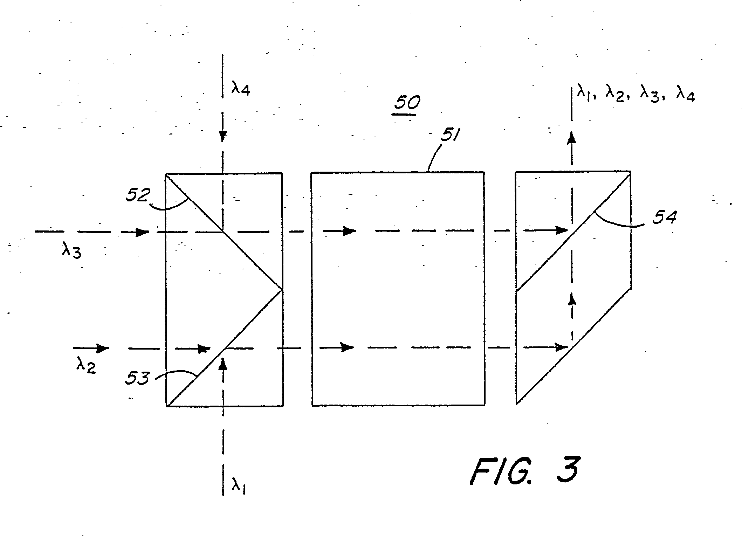

FIG. 3 is a block diagram of a four channel multiplexer utilizing a single birefringent stage in accordance with one embodiment of the invention

An apparatus which multiplexes or demultiplexes any number, n, of wavelength-separated channels using a tree configuration of n-1 birefringent interferometer units. All units in the tree configuration can be identically constructed, although some units may have different lengths of birefringent crystal elements than others.

A birefringent interferometer unit acts as a bidirectional optical comb filter, which transmits alternate wavelength channels along different paths, that is, each of the two transmission paths of the comb filter has a periodic power-vs-wavelength transfer characteristic, each essentially one-half of a period out of phase with the other.

Thus, for a set of discrete wavelengths, $\lambda_1$, $\lambda_2$, ...., $\lambda_n$, separated by approximately the same amount $\Delta\lambda$, every other wavelength propagates along one of the two possible optical paths through the comb filter, and the wavelengths between them travel along the other path.

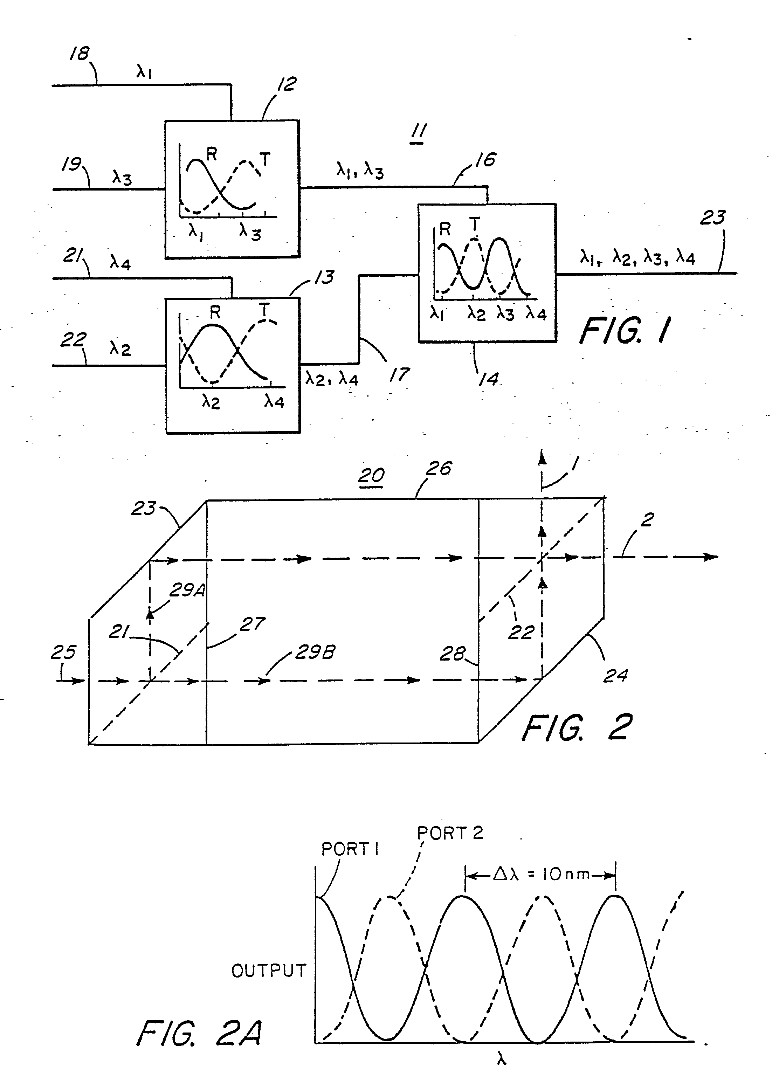

Referring to Fig. 1, there is shown a block diagram of a typical birefringent multiplexer/demultiplexer 11.

The birefringent multiplexer/demultiplexer 11 uses a tree structure of comb filter units 12, 13, 14. Each comb filter unit 12, 13, 14, as shown in Fig. 1, contains a graph of the transfer functions for the two transmission paths through it. A four-channel device, as depicted in Fig. 1, is shown for simplicity. The lines 16, 17 between the units represent interconnecting fibers or, alternatively, can represent freely propagating collimated light beams.

Each of the two comb filters 12, 13 has a basic channel spacing of $2\Delta\lambda$. The channels have this wavelength separation and travel separately along two transmission paths of the comb filter unit. Each unit 12, 13 has the same channel spacing, but tuned $\Delta\lambda$ away from each other. The two comb filters 12, 13 guide the channels along different paths, separated on the left and combined on the right.

Whereas, as illustrated in Fig. 1, there are four separated propagation paths 18, 19, 21, 22 at the left of the figure, there are only two paths 16, 17 to the right of the unit 12, 13, as illustrated in the center of the figure. Each of those two paths 16, 17 carry two of the optical wavelengths freely in either direction. These two paths 16, 17 are coupled into the separated ports of the third comb filter unit 14 at the right of the figure, which third unit 14 has a channel spacing equal to $\Delta\lambda$. Thus, the even channels #2 and #4 are transmitted along one path 17, and the odd channels #1 and #3 take the other path 16. Both paths combine at 23, at the system link side at the right. There, all four channels propagate together, each wavelength able to travel independently in either direction.

As the three comb filters 12, 13, 14 are bidirectional, the entire configuration is bidirectional for each wavelength path. Thus, the overall system heretofore described can be used to multiplex four channels onto a single fiber, for example. A similar unit can be used at the receiving end of the system, in reverse manner, to demultiplex the four channels from one another.

In another embodiment, both ends of the system include both transmitters and receivers, so that the devices at either end can act as multiple wavelength duplexers. For example, any one or more wavelength channels can propagate from left to right, while others propagate from right to left.

Referring to Fig. 2, there is shown a schematic optical diagram of a single comb filter unit 20. The comb filter unit 20 includes two polarization beam splitters 21, 22, two reflecting surfaces 23, 24, and a birefringent element 26 having parallel opposite sides 27, 28. The birefringent element 26 can be crystalline, such as quartz or calcite, but can be, alternatively, any other birefringent material such as stressed plastic, electro-optical material, etc.

The optical axis of the birefringent element 26 is nominally parallel to its two parallel surfaces 27, 28. The optical axis is oriented half way between the axes of polarization of the two beams incident upon it (i.e., 45° from each other). The parallel surfaces 27, 28 are oriented perpendicular to the common direction of propagation of the two beams.

In operation, assume a light beam is provided at the input port 25, at the left of Fig. 2. Output ports 1, 2 are provided at the right, and top right, of the figure, as shown. Alternatively, a pair of light beams can be provided at the right, and top right, for combined output at the left port 25.

In operation, assume a collimated beam of light (whose polarization state is immaterial) enters the input port 25 and is directed onto the first polarization beam splitter 21. The beam splitter 21 splits the beam into two linearly polarized beams 29A, 29B whose directions of propagation can be perpendicular to one another as shown, or at any other angle. The reflecting surface 23 reflects beam 29A parallel to the other 29B, and both beams 29A, 29B enter the birefringent element 26.

Within the birefingent element 26, both beams 29A, 29B undergo essentially the same transformation. The component of the optical electrical field vector which is parallel to the extraordinary axis of the material propagates faster or slower, depending upon the material, than the component parallel to the ordinary axis. Thus, upon emerging from the right side of the element 26, as shown in Fig. 2, these two components are out of phase by an amount proportional to the thickness of the birefringent material, and inversely proportional to the optical wavelength. These two vector components combine to yield a polarization state which, depending on the phase, is one of the following: (1) linearly polarized parallel to the input beam polarization, (2) linearly polarized perpendicular to the input beam polarization, or (3) elliptically or circularly polarized.

The beam component 29B that entered the input port 25 and was not reflected by the polarization splitter 21 is reflected by the second reflecting surface 24 towards the second polarization beam splitter 22. The other beam 29A that was reflected by the first polarization beam splitter 21 and the first reflecting surface 23 is also directed to the second polarization beam splitter 22.

When a polarization transformation occurs which is linearly polarized parallel to the input beam polarization, i.e., effectively no change, then the upper beam 29A in Fig. 2 continues onward to the second polarization beam splitter 22, where it is reflected upward toward port 1. The lower beam 29B is reflected by the second reflecting element 24 to the second polarization beam splitter 22, where it is transmitted upward to port 1. Thus, all the light passes through port 1.

When a polarization transformation occurs wherein linearly polarized light perpendicular to the input beam polarization occurs, i.e., rotation by $90^\circ$, then the upper beam 29A, in Fig. 2, is transmitted by the second polarization beam splitter 22 to port 2. Similarly, the lower beam 29B is reflected by the second polarization beam splitter 22 to port 2. Thus, all of the light is transmitted through port 2.

When elliptical or circularly polarized light occurs, the light beam has both $0^\circ$ and $90^\circ$ components in both beams 29A, 29B, and thus, components of each are transmitted through the two ports 1, 2.

For multiplexing purposes, only the first two types of transformation are desirable, namely, linearly polarized parallel to the light beam polarization or linearly polarized perpendicular to the input beam polarization. Anything else, such as elliptical or circular polarization results in undesirable crosstalk.

For a particular thickness, t, of birefringent material with extraordinary and ordinary indices of refraction, $n_e$ and $n_o$, the first transformation, i.e., linearly polarized parallel to the input beam polarization occurs for wavelengths $\lambda_p$ for which
$$\lambda_p = 2(n_e-n_o)t/p, \text{ where}$$
$$p = 2,4,6,...,$$
and p is equal to the number of half-wavelengths of retardation that light of wavelength $\lambda_p$ experiences while traversing the thickness t.

Similarly, the second transformation, wherein the vector components are linearly polarized perpendicular to the input beam polarization, occurs for those wavelengths $\lambda_p$ where
$$\lambda_p = 2(n_e-n_o)t/p, \text{ where}$$
$$p = 1,3,5,...$$
Although the foregoing formulas are approximate, since it is being assumed that n does not depend upon $\lambda$, they are quite accurate over most domains of interest.

To tune a comb filter 20 to a desired wavelength, it is only necessary to replace the birefringent prism 26 with one having a different thickness. Alternatively, or supplementary, a material can be used with a different $\Delta n$. Further, any technique which changes the overall retardation through the crystal path can be used to tune the wavelength passband.

In situations where the polarization state is known, simpler designs can be utilized. For example, in the case of a two-channel multiplexer, for lasers, when laser light is conducted to the multiplexer without losing its originally highly linear polarization state, then the multiplexer can be reduced to a single polarization beam splitter.

When utilizing more than two channels, the availability of polarized input signals can simplify the multiplexer. Referring to Fig. 5, there is shown a block diagram of a four-channel multiplexer 50 that can be constructed with a single birefringent stage 51, in lieu of three as described hereinabove. The only principal change from the single unit of Fig. 2, as described heretofore, is use of two polarization beam splitters 52, 53, replacing one polarization beam splitter 21, and one of the reflecting surfaces 23. These two beamsplitters are each used here to combine two orthogonally polarized beams, respectively. For even more additional channels, using polarized signals reduces the number of birefringent comb filters units 50 from n-1 to (n/2)-1, where n is a power of 2.

## Claims

1. A four channel optical wavelength multiplexer comprising
a birefingent element (51) having opposed parallel sides;
a first polarization beamsplitter (53) adapted to pass optical signals at a wavelength $\lambda_2$ and to reflect optical signals at wavelength $\lambda_1$, so that both signals at wavelengths $\lambda_2$ and $\lambda_1$ are directed along a first common path incident upon one of said parallel sides of said element;
a second polarization beamsplitter (52) adapted to pass optical signals at a wavelength $\lambda_3$ and to reflect optical signals at wavelength $\lambda_4$, so that both signals at wavelengths $\lambda_3$ and $\lambda_4$ are directed along a second common path, parallel to said first common path, incident upon said one parallel side of said element;
a first reflecting surface for reflecting signals at wavelengths $\lambda_2$ and $\lambda_1$, that have traversed said first common path and said element; at an angle perpendicular to said first common path; and
a third polarization beamsplitter (54) for passing said signals at wavelengths $\lambda_1$ and $\lambda_2$, and for reflecting signals at wavelengths $\lambda_3$ and $\lambda_4$ that have traversed said second common path and said element, so that all signals $\lambda_1$, $\lambda_2$, $\lambda_3$ and $\lambda_4$ are outputted along a third common path.

FIG. 1

FIG. 2

FIG. 2A

FIG. 3